# EUROPEAN PATENT SPECIFICATION

(11) **EP 1 524 916 B1**
(45) Date of publication and mention of the grant of the patent: **02.07.2008**
(21) Application number: 03740418.3
(22) Date of filing: 04.07.2003
(51) Int. Cl.: A23L 1/212, A23L 1/20, A23L 1/40, A23L 1/01

(54) **PROCESS FOR MAKING POWDERY PRODUCT BY EXTRUSION-EXPANSION**
VERFAHREN ZUR HERSTELLUNG VON PULVERFÖRMIGEM, REHYDRIERBAREM PRODUKT DURCH EXTRUSION-EXPANSION
PROCEDE DE FABRICATION PAR EXTRUSION-EXPANSION DE PRODUIT EN POUDRE REHYDRATABLE

(30) Priority: 19.07.2002 EP 02077933
(43) Date of publication of application: 27.04.2005
(73) Proprietor: Nestec S.A., 1800 Vevey (CH)
(72) Inventor: WITSCHI, Friedrich, CH-8045 Zuerich (CH); DUPART, Pierre, 1010 Lausanne (CH)
(74) Representative: Thomas, Alain
(86) International application number: PCT/EP2003/007191
(87) International publication number: WO 2004/008881

(56) References cited:
- EP-A- 0 026 102
- EP-A- 0 331 820
- EP-A- 1 051 917
- WO-A-00/56174
- DE-A- 2 952 048
- FR-A- 2 008 490
- US-A- 3 700 467
- US-A- 4 031 266
- US-A- 4 810 517

## Description

The present invention relates to a process for manufacturing a dehydrated food product which forms a vegetable based pulpy-textured sauce, mashes, pulps or soup when rehydrated with an aqueous liquid.

Dehydrated reconstituable products are known and exist for a long time, but even if they can be considered as satisfactory on the point of view of taste or flavour, they do not allow to provide a product with the texture features of the home-made ones. Indeed, the existing dehydrated product generally give, upon rehydration, a soup or a sauce that exhibits a smooth, continuous and homogeneous texture. Concerning sauces like bechamel and hollandaise ones or soups like veloutés, such a smooth, continuous, creamy and steady texture is of prime interest. However, in some other applications, it is desirable to obtain a product that is heterogeneous, namely pulpy and fleshy. For example, tomato sauce or tomato concassée that are home-made exhibit a pulpy texture because of the presence of small, but perceptible, fractions of tomato flesh in suspension in tomato sauce. Such texture is also obtained upon preparation of stewed or mashed fruits or porridges having the characterizing pulpy texture.
The home-made tomato or fruit mashes, pulps and the like exhibit this desired texture but the use of dehydrated products does not enable the manufacture of product with this essential organoleptic feature of pulpiness.

Some attempts have been done in order to address this problem. In particular, a satisfactory solution is based on the use of the so-called "starch-sponge". Starch-sponge is obtained by slowly cooling an aqueous starch paste to the freezing point and drying it in order to obtain an aerated and porous matrix of starch.

Therefore EP0026102 discloses a dehydrated reconstitutable product which enables the reconstitution of a pulpy textured tomato sauce, upon rehydration with hot aqueous liquid, this dehydrated product comprising added starch in the form of starch sponge grains of the size in the range of 0.125 mm to 6 mm. Such product gives very satisfactory results and enables the manufacture of a pulpy tomato sauce, similar to a home-made one, by rehydration with hot aqueous liquids. However, this kind of product presents some drawbacks. The manufacture of starch-sponge is a time-consuming, cumbersome and costly process. Dehydrated products that contain starch-sponge need to be reconstituted with hot water in order to obtain a complete and rapid swelling of the granulate. Finally, the stability of the reconstituted starch-sponge is limited in case of prolonged cooking time.
An other proposed solution is disclosed in EP 1051917. Such process is suitable for producing dry products that can be reconstituted with water to form fruit or vegetable pulps.

This process comprises the steps of roller-drying of external starch-containing fruit and vegetable concentrates to obtain flakes, agglomerating the flakes using fruit and vegetable concentrate and heat-moisture treating the agglomerate that can be dried.
Such process is time and energy consuming because of the heat-moisture treating step. Moreover, these flakes need to be boiled and cooked in order to develop the pulpy texture.
This is not ideal for dry instant products.

In DE-A-2952048, a dried feed or food base, which may be combined with water to form a vegetable soup or puree, is made from a mixture of comminuted fresh or dried vegetable material with starch or flour by steaming the mixture in an extruder followed by expansion and drying.

Therefore, there is a need for a simple and quick process that enables the manufacture of a dry product easily reconstitutable with water for providing a pulpy vegetable-based food product such as soup, sauce, pulp, porridge or mash for example.

Accordingly the present invention is directed to a process for the manufacture of a dry food product reconstitutable with cold or hot aqueous liquid to a pulpy-textured product comprising the steps of :
- preparing a mixture by mixing 20 to 60 parts of vegetable product powder as defined in claim 1, preferably 30 to 40 ; 20 to 60 parts of starch, preferably 25 to 40 ; 15 to 35 parts of flour as defined in claim 1, preferably 20 to 30 ; from 0 to 18 parts of pieces of vegetable product, preferably 3 to 10 and optionally water in order to obtain a mixture having a water content of 6 to 20% by weight, preferably 8 to 15,
- extrusion-cooking the obtained mixture at 60 to 110°C, preferably 80 to 100°C for 20 to 90 s.,
- expanding the extrusion-cooked mixture into an expanded-extrusion-cooked product having a water content of 5 to 15%, preferably 7 to 12%,
- further drying the obtained expanded product to a water content of 1 to 5%, preferably 1.5 to 3%,
- optionally grounding the dried product to an average granulometry of about 0.5 to 10 mm.

In the present description, the % are given by weight.
In the present description, the term "vegetable product" encompass any vegetable according to the culinary meaning such as leaf-vegetable, stalk-vegetable, bud-vegetable, fruit-vegetable, root-vegetable or tuber-vegetable, but it also concerns fruits. The vegetable product powder used in the process according to the present invention is selected from the group consisting of tomato, pepper, spinach, celery, carrot, mushrooms, peas, beans, onion, asparagus and/or lentils. The powder used is not limited to vegetable powder but it may also be fruit powder if one wishes to obtain a dry product suitable for the reconstitution of fruit porridge, marmalade or mash. The fruit powder is selected from the group consisting of apricot, banana, strawberry, apple, pear, peach, cranberry, alone or in combination.
Using this process, it is therefore possible to obtain a dry product rich in vegetable that enables the manufacture of a rich and pulpy vegetable sauce, soup, purée or the like by simply adding water. Thus, for example, a full rich tomato sauce may be prepared if tomato powder is used. Such a tomato sauce presents the organoleptic features very similar to a home-made tomato sauce or pulp. The reconstitution of the product is possible without boiling and without any additional cooking. A simple addition of hot water allows to reconstitute a pulpy-texturized sauce or soup, depending on the quantity of water that is added. Of course, the obtained sauce or soup may be cooked or at least kept warm without loosing its textural properties.

The different vegetable powders may be used alone or in combination in order to customized the taste, the texture or the colour of the product to reconstitute. The preferred vegetable powder is tomato, celery, carrot, peas or beans powders, for example, due to the fact that the dry product according to the present invention is preferably intended to be used in salty culinary applications such as dry soups, dry sauce or dry mix for quick reconstitution of meals, for example. Due to the pulpy texture desired and obtained, the dry product according to the present invention is preferably dedicated to the reconstitution of tomato sauce or tomato-based soups or purées. Therefore the preferred vegetable powder is tomato powder. The tomato powder may be any common tomato powder commercially available obtained by dehydration of tomato paste or tomato mash. Tomato powder is 100% tomato solid product whose composition is identical to tomato, on a dry base, except that seeds and peel have been removed.
As said before, in the context of the manufacture of a dry tomato sauce product, tomato powder will be used, however, it may be supplemented with any other vegetable powder such as onion powder or celery powder, for example. The present invention is not limited to the manufacture of tomato-based dry product and the present invention enables the manufacture of a dry product that gives upon reconstitution with water, a pulpy and unctuous product.

The starch used may be any starch from any origin. Thus, it may be potato starch, rice starch, wheat or maize starch, native or modified, chemically or physically, alone or in combination.
The flour used is selected from the group consisting of wheat, rice, pea, lentil, bean and lucerne flour.

The pieces of vegetable product added in the mixture may be fresh, dehydrated of frozen pieces of vegetable product. The pieces of vegetables used may be selected from the group comprising onion, leak, pepper, peas, garlic, celery, tomato, for example, alone or in combination. These pieces of vegetables provide some fibers to the mixture and therefore participate, in a certain extend, to the pulpiness of the reconstituted product. Moreover, the addition of fresh, dried or frozen pieces of vegetables contributes to the taste of the final product. The pieces of vegetable product may also be selected from the group comprising apricot, banana, strawberry, apple, pear, peach and cranberry alone or in combination.
The size of the pieces of vegetable product is not critical and will depend of the nature of the vegetable and will preferably be in the size range of about 0.1 to 9 mm for example.

The water content of the mixture before extrusion ranges from 6 to 20% by weight and depending on the amount and the nature (fresh or dried) of the pieces of vegetable added, the quantity of water will differ. Therefore, the total water content of the mixture to be cook-extruded ranges from 6 to 20% by weight, preferably from 8 to 15% by weight.

The mixture may also comprise flavour, spices, taste enhancer, vitamins, minerals as wells as several additives such as emulsifiers, organic acids or polysaccharides like alginates for example, in the range of 0 to 2% by weight.

The mixture may be prepared by mixing the powdery ingredients and by adding the optional water as well as the wet ingredients such as fresh pieces of vegetables.
Thus, the mixture is fed into a cooking-extruder and the mixture is cook-extruded at a temperature from 60 to 110°C, preferably 80 to 100°C during about 20 to 90 seconds, preferably 30 to 60 seconds.

The process according to the present invention is achieved by mixing 20 to 60 parts of vegetable product powder, preferably 30 to 45 parts; 20 to 60 parts of starch, preferably 25 to 40 ; 15 to 35 parts of flour, preferably 20 to 30 ; from 0 to 18 parts of pieces of vegetable product. Depending of the moisture of this mixture, water may be added in order to obtain a mixture with a water content of 6 to 20%, preferably 8 to 16%. This mixture may then be fed into a twin-screw cooking-extruder. The mixture is mixed, kneaded and heated at temperature of 60 to 110°C. The different mixing and kneading operation is achieved in a residence time of 20 to 90 seconds, preferably 30 to 50 seconds under a pressure of about 50 to 120 bars, the screw turning at a rotating speed ranging from about 100 and 250 turns/minute.

The cooking of the mixture may be achieved in the cooking section of the cooking-extruder where the mixture is heated, compressed and sheared in order to form a cooked plastic mass. Such a cooked mass may then be extruded through a die thanks to the screw or to the twin-screws of the cooking-extruder.
For carrying out the different operation of mixing, kneading, cooking, shearing and extruding, a cooking-extruder commonly used in the food industry may be used, preferably a twin-screw cooking-extruder. A cooking-extruder of about 800 to 1500 mm length may be used for example that allows a residence time of 20 to 90 seconds.
Such cooking-extruding step may be achieved with a cooking-extruder CLEXTRAL® BC 45, 1200 mm long, for example. This device comprises a barrel in which two rotating screws are disposed. These two screws rotate in the same direction and fit in each other. The barrel is thermosated allowing the heating or the cooling of the mixture during kneading. The energy furnished by the screws to the mixture ranges from about 0.07 to about 0.15 kW/kg.

The cooking-extruder may comprise from 4 to 6 heating zones for example. In the first zone, the screws are arranged in order to transport and effect a mixing of the ingredients. In the following zones, the mixture is kneaded and cooked and the temperature ranges from 60 to 110°C. Finally in the last zone the temperature of the barrel is lowered to about 50 to 85°C in order to avoid any overheating of the mixture. The temperature of the mixture may thus increases from ambient temperature to about 100°C and regulated in order to avoid thermal degradation (e.g. burning and browning)
In the last zone, the mixture is forced through a die fitted at the end of the screws. The die may comprise one or more apertures whose diameter may vary from about 2 to 6 mm.
A part of the water of the thermoplastic mass escapes upon extruding through the die and therefore the extruded strand expands and exhibits a porous structure and a residual moisture in the range of 5 to 15%, preferably 7 to 12 %. Upon extrusion the mixture will expand by a factor of about 5 to 10 depending on its composition, its moisture and the pressure in the extruding zone of the cooking-extruder.
The mixture may be extruded in the shape of a ribbon, a strand a trip or a sausage for example. The extruded-expanded product may be cut directly after expulsion from the extruder by means of a rotating knife fitted on the exterior face of the extrusion die. Alternatively, a long extruded strand may be obtained and cut into pieces afterwards.
The shape and size of the product is not critical for the drying step and the extruded product may be dried either in the long strip shape or after cutting into small pieces. Of course, the smaller is the extruded product, quicker is the drying step and therefore it may be preferred to dry the extruded product in the shape of pellets.
This drying step may be achieved by any suitable means such as heated air at about 60 to 110°C during 20 to 200 minutes. The final product has a moisture content of 1 to 5 %, preferably 1.5 to 3 % by weight and a Aw of about 0.15 to 0.35.
Finally the dried product may be ground in order to facilitate the reconstitution upon addition of water. This comminuting step may be achieved by any suitable means, such as hammer mill or any grinder in order to obtain particles of about 0.5 to 10 mm diameter, preferably 1 to 5 mm. Thus, upon reconstitution, the different sized particles will swell and give in the mouth a heterogeneous textural perception of a pulpy and fleshy product.
The use of a ground product for the reconstitution of a pulpy texturized meal is not compulsory. Thus, the product in the shape of extruded-expanded pellets may be used directly for reconstitution in water. In such a case, after addition of water, it would be useful to grind the hydrated pellets in order to obtain a mixture of small swollen particle that contribute to the pulpiness.

The size of the particles will influence the perception of pulpiness upon consumption. Thus, like in a tomato pulp product that contains some particles of tomato flesh, the reconstituted product will also contain some major particles imitating tomato flesh.
The fineness, smoothness and pulpiness and extend of texturing may be selectively chosen by the choice and amount of the particles as well as the amount of starch in the base sauce mixture.

The dried extruded product looks like porous particles and has an apparent density of about 200 to 700 g/l, preferably 300 to 500 g/l depending of the expansion upon extrusion as well as the comminuting intensity and thus the particle size.

Thanks to the expansion upon extrusion, the product according to the present invention has a thin continuous matrix with pores whose diameter is greater than the wall of the matrix, both pores and matrix wall are visible by naked eye.
The reconstitution of the product may easily be achieved by addition of water or aqueous product such as bouillon or milk for example, either at ambient temperature or warm. It is preferable to add boiling liquid in order to speed up the rehydration time but it is not limiting and rehydration with cold or warm liquid is also possible. The reconstitution may be achieved by mixing 1 part of the dried product, preferably milled, with 2 to 4 parts of liquid. Upon rehydration, the particles of the dry product will swell without substantial disintegration to provide a pulpy texture. If the hydrated mixture is brought to boiling and maintained at hot temperature, one cannot notice any disintegration and therefore not modification of pulpiness.
The product obtainable according to the process of the present invention presents a high convenience level for any consumer seeking for easily and quickly reconstitutable dry product with high organoleptic qualities.
Thus, the present product allows an easy and convenient reconstitution of a tomato sauce without cumbersome home-manufacture processing of tomato-peeling, tomato cooking, grounding and blending in order to obtain a full pulpy texture. Indeed, the present product allows to easily obtain a rich and pulpy tomato sauce that does not exhibit the classical drawbacks of classical dry product such as continuous smoothness, creamyness and somehow gelatinous texture.
The dry product according to the invention may be used in a variety of culinary applications such as dry soups, sauce, mashes, and pulps or as part of such product in order to provide a pulpy component to the final product.
The product according to the present invention may also be used for the manufacture of topping or filling for which the pulpiness is of prime interest. Thus, for example, tomato-based pizza topping may be prepared by rehydration of the dry product according to the present invention. Filling for snack product may also be easily obtained and it may also concern sweet filling like apple compote if apple powder is used in the present process, for example. Therefore, it can be seen that the product according to the present invention may be used in a wide variety of application : from traditional dry mixes for soup or sauce to topping or filling mixes provided that a pulpy and fleshy texture is desired in the reconstituted product.

### EXAMPLE 1

A 10% moisture mixture comprising 40% of commercial tomato powder, 20% of wheat flour type 55, 39% of potato starch and 1% of citric acid is fed into a twin-screw cooking-extruder CLEXTRAL® BC 45, 1200 mm long. The rotating speed of the screws is 200 rpm. This extruder is subdivided into 6 zones. The first zone is at ambient temperature and allows a mixing and progression of the mixture. The second zone is heated at 40°C. The following zones 3 and 4 are heated at 100°C and the last two zones are thermostated at 55°C.
The mixture is extruded through two 3 mm extrusion dies and the temperature of the mixture upon exit of the extruder is about 83°C. The product is extruded in the shape of a strand of 2 cm diameter. The product is then dried for 180 minutes at a temperature of 70°C. After drying, the product exhibits an Aw of 0.30 and a dry matter of 98%. The dried product is then ground until two third of the particles show on average diameter of from 2 to 4.5 mm.
The dried obtained product may be reconstituted by addition of two parts of boiling water to one part of the product. After 2 minutes rehydration and swelling of the particles, one obtains a spoonable and fluid product that looks, smells and feels very similar to a tomato concassée or tomato sauce made from peeled tomatoes.

### EXAMPLE 2

The same procedure as example 1 was repeated except that the mixture had the following composition: 40% tomato powder, 20% pea flour, 39% potato starch and 1% citric acid.

### EXAMPLE 3

The same procedure as example 1 was repeated except that the mixture had the following composition :
34.1% tomato powder, 32.8% potato starch, 16.8% wheat flour and 15.5 % of frozen onion cubes (40 mm³).
The moisture of this mixture was 17%, by weight.
After 180 min of drying at 70°C, the product exhibited a dry matter of about 97.8%.
After reconstitution with boiling water as in example 1, the product exhibited an even more fleshy texture as well as a pleasant cooked onion flavour.

### EXAMPLE 5

The same procedure as example 1 was repeated except that the mixture had the following composition:
40% apple powder, 20% wheat flour, 39% potato starch and 1% citric acid.
After reconstitution with cold water as in example 1, the product exhibited a fleshy texture as well as a pleasant apple flavour very close to a apple compote made of fresh mashed and grinded fruits.

## Claims

1. Process for the manufacture of a dry food product reconstitutable with cold or hot aqueous liquid to a pulpy-textured product comprising the steps of :
- preparing a mixture by mixing 20 to 60 parts of vegetable product powder; 20 to 60 parts of starch; 15 to 35 parts of flour; from 0 to 18 parts of pieces of vegetable product and optionally water in order to obtain a mixture having a water content of 6 to 20%, said vegetable product powder being selected in the group consisting of tomato, pepper, spinach, celery, carrot, mushrooms, peas, beans, onion, asparagus and lentils alone or in combination or the group consisting of apricot, banana, strawberry, apple, pear, peach and cranberry alone or in combination, said flour being selected from the group consisting of wheat flour, pea flour, lentil flour, bean flour and lucerne flour,
- extrusion-cooking the obtained mixture at 60 to 110°C for 20 to 90 seconds,
- expanding the extrusion-cooked mixture into an expanded-extrusion-cooked product having a water content of 5 to 15%,
- further drying the obtained expanded product to a water content of 1 to 5%.

2. Process according to claim 1, **characterized in that** the dried expanded product is ground to an average granulometry of about 0.5 to 10 mm.

3. Process according to claim 1, **characterized in that** the pieces of vegetable product are fresh, frozen or dried.

4. Process according to claim 1, **characterized in that** the pieces of vegetable product are selected from the group consisting of onion, leak, pepper, peas, garlic, celery, tomato, used alone or in combination.

5. Process according to claim 1, **characterized in that** the pieces of vegetable product are selected from the group consisting of apricot, banana, strawberry, apple, pear, peach and cranberry alone or in combination.

## Patentansprüche

1. Verfahren zur Herstellung eines getrockneten Lebensmittelprodukts, das mit einer kalten oder heißen wässrigen Flüssigkeit zu einem Produkt mit breiartiger Textur rekonstituierbar ist, das die Schritte umfasst:
- Herstellen einer Mischung durch Vermischen von 20 bis 60 Teilen eines Pflanzenproduktpulvers; 20 bis 60 Teilen Stärke; 15 bis 35 Teilen Mehl; von 0 bis 18 Teilen von Stücken eines Pflanzenprodukts sowie ggf. Wasser, um eine Mischung zu erhalten, die einen Wassergehalt von 6 bis 20% aufweist, wobei das Pflanzenproduktpulver aus der Gruppe ausgewählt ist, die besteht aus Tomate, Paprika, Spinat, Sellerie, Karotte, Pilzen, Erbsen, Bohnen, Zwiebel, Spargel und Linsen allein oder in Kombination oder aus der Gruppe, die besteht aus Aprikose, Banane, Erdbeere, Apfel, Pfirsich, Birne und Moosbeere allein oder in Kombination, wobei das genannte Mehl aus der Gruppe ausgewählt ist, die besteht aus Weizenmehl, Erbsenmehl, Linsenmehl, Bohnenmehl und Luzernemehl.
- Kochextrudieren der erhaltenen Mischung bei 60 bis 110 °C für 20 bis 90 Sekunden,
- Expandieren der kochextrudierten Mischung zu einem expandierten kochextrudierten Produkt mit einem Wassergehalt von 5 bis 15%,
- weiteres Trocknen des erhaltenen expandierten Produkts auf einen Wassergehalt von 1 bis 5%.

2. Verfahren nach Anspruch 1, **dadurch gekennzeichnet, dass** das getrocknete expandierte Produkt auf eine mittlere Granulometrie von etwa 0,5 bis 10 mm gemahlen wird.

3. Verfahren nach Anspruch 1, **dadurch gekennzeichnet, dass** die Stücke des Pflanzenprodukts frisch, gefroren oder getrocknet sind.

4. Verfahren nach Anspruch 1, **dadurch gekennzeichnet, dass** die Stücke des Pflanzenprodukts aus der Gruppe ausgewählt sind, die besteht aus Zwiebel, Lauch, Paprika, Erbsen, Knoblauch, Sellerie, Tomate, die allein oder in Kombination verwendet werden.

5. Verfahren nach Anspruch 1, **dadurch gekennzeichnet, dass** die Stücke des Pflanzenprodukts aus der Gruppe ausgewählt sind, die besteht aus Aprikose, Banane, Erdbeere, Apfel, Birne, Pfirsich und Moosbeere allein oder in Kombination.

## Revendications

1. Procédé pour la production d'un produit alimentaire sec reconstituable avec un liquide aqueux froid ou chaud en un produit à texture molle, comprenant les étapes consistant :
- à préparer un mélange en mélangeant 20 à 60 parties d'une poudre d'un produit végétal ; 20 à 60 parties d'amidon ; 15 à 35 parties de farine ; 0 à 18 parties de morceaux de produit végétal et éventuellement de l'eau afin d'obtenir un mélange ayant une teneur en eau de 6 à 20 %, ladite poudre de produit végétal étant choisie dans le groupe consistant en tomate, poivron, épinard, céleri, carotte, champignons, pois, haricots, oignon, asperge et lentilles, seuls ou en association, ou dans le groupe consistant en abricot, banane, fraise, pomme, poire, pêche et canneberge, seuls ou en association, ladite farine étant choisie dans le groupe consistant en farine de blé, farine de pois, farine de lentille, farine de haricot et farine de luzerne,
- à soumettre à une cuisson-extrusion le mélange obtenu à une température de 60 à 110°C pendant 20 à 90 secondes,
- à expanser le mélange ayant subi une cuisson-extrusion en un produit ayant subi une cuisson-extrusion-expansion ayant une teneur en eau de 5 à 15 %,
- à soumettre à un séchage supplémentaire le produit expansé obtenu jusqu'à une teneur en eau de 1 à 5 %.

2. Procédé suivant la revendication 1, **caractérisé en ce que** le produit expansé séché est broyé à une granulométrie moyenne d'environ 0,5 à 10 mm.

3. Procédé suivant la revendication 1, **caractérisé en ce que** les morceaux de produit végétal sont frais, congelés ou déshydratés.

4. Procédé suivant la revendication 1, **caractérisé en ce que** les morceaux de produit végétal sont choisis dans le groupe consistant en oignon, poireau, poivron, pois, ail, céleri, tomate, utilisés seuls ou en association.

5. Procédé suivant la revendication 1, **caractérisé en ce que** les morceaux de produit végétal sont choisis dans le groupe consistant en abricot, banane, fraise, pomme, poire, pêche et canneberge, seuls ou en association.
